# EUROPEAN PATENT SPECIFICATION

(11) **EP 1 500 327 B1**
(45) Date of publication and mention of the grant of the patent: **11.02.2009**
(21) Application number: 04394040.2
(22) Date of filing: 05.07.2004
(51) Int. Cl.: A01K 1/10, A01K 5/00

(54) **An animal stall**
Tierstall
Stalle pour bétail

(30) Priority: 04.07.2003 IE 030502
(43) Date of publication of application: 26.01.2005
(73) Proprietor: Southern Pharmaceutical Co Ltd, County Cork (IE)
(72) Inventor: O'Donovan, Damien, County Cork (IE)
(74) Representative: Schütte, Gearoid

(56) References cited:
- EP-A- 1 254 596
- EP-A1- 0 397 257
- FR-A1- 2 597 300

## Description

This invention relates to animal stalls.

Various animal stall systems are available essentially comprising an upright support frame with a number of spaced-apart openings each for through passage of an animals head to feed at an opposite side of the support frame. Typically the openings are defined by head bars which may be fixed or adjustable to allow an animal to insert its head through the opening which it then drops down to feed, the lower portion of the opening engaging each side of the animal's neck behind the animal's head to retain the animal in the feeding position. A stall of this type is disclosed in EP-A-0397257. A problem can arise in that an animal may slip when feeding and the neck of the animal becomes caught at the bottom of the access opening. The animal often has difficulty in retaining its feet as it is left hanging by its neck at the stall frame. An animal has a tendency to panic in this situation and may thrash about and cause injury to itself and/or neighbouring animals in attempting to regain its feet. A pivoting head bar with a central pivot is disclosed in US 2003/0000481 which allows enlargement of a bottom portion of the opening to facilitate release of the animal's head. However, because of the construction the opening narrows upwardly which may cause difficulties by restricting movement of the animal's head through the opening.

The present invention is directed towards overcoming this problem.

According to the invention there is provided an animal stall, including:
a support frame,
a pair of spaced-apart head bars mounted on the support frame and defining therebetween and access opening for through passage of an animal's head,
said head bars including at least one hingeing head bar pivoted intermediate it's ends about a pivot point on the support frame for hingeing about a substantially horizontal axis between a position generally parallel with the other head bar to capture an animal's head in the opening and an angled position relative to the other head bar to enlarge portion of the opening at one side of the pivot point to allow through passage of an animal's head,
characterised in that means is provided for relative lateral movement between the pivot point and the other head bar between a normal operating position in which the spacing between the pivot point and the other head bar is sufficient to allow through passage of the animal's neck but not it's head and a safety position of increased spacing between the pivot point and the other head bar which allows free passage of the animal's head through the access opening.

Thus advantageously if an animal is having difficulty the head bars can be moved into the fully open safety position to allow release of the animals head.

In one embodiment the head bars are movable laterally relative to each other on the support frame between the normal operating position and the fully open safety position.

In another embodiment the head bars are substantially parallel in the fully opened safety position.

In a further embodiment the head bars are movable relative to each other in a substantially upright position.

In a further embodiment locking means is provided for releasably securing the head bars in the normal operating position with associated actuating means operable to open the locking means to allow relative movement of the head bars to the fully open safety position.

In another embodiment the locking means is a movable latch mounted on the support frame which is releasably engagable with a complementary receiver on one of said head bars which is movably mounted on the support frame.

In another embodiment the latch is biased towards a receiver engaging position and a cam release means is provided which is operable to move the latch against said bias to a released position.

In another embodiment the hingeing head bar is movably mounted on the support frame and other head bar is fixed on the support frame.

In another embodiment the hingeing head bar is slidably mounted on the support frame.

In another embodiment the hingeing head bar is pivotally mounted on the support frame.

In a preferred embodiment the hingeing head bar is pivotally mounted intermediate its ends by means of a pivot point on the support frame for width adjustment of the access opening both above and below the pivot mount.

In another embodiment the pivot point comprises a pivot pin which engages between the hingeing head bar and a pivot arm which is pivotally mounted on the support frame.

In a further embodiment the receiver of the locking means is provided on the pivot arm.

In another embodiment an actuating rod is rotatably mounted on the support frame, the cam being mounted on the actuating rod and projecting outwardly therefrom for engagement with a complementary spring loaded cam follower on which the latch is mounted, a spring biasing the cam follower such that the latch is normally engaged with the complementary receiver, the actuating rod being rotatable to engage the cam with the cam follower to urge the latch into a disengaged position against spring bias.

In another embodiment the cam follower is slidably mounted on the support frame. Preferably the cam follower is vertically slidable on an upright stanchion on the support frame.

In another embodiment a stop is provided on the actuating rod which is engagable with a locking arm at an upper end of the hingeing head bar to prevent movement of the upper end of the hingeing head bar away from the fixed head bar, the actuating rod being rotatable for movement of the stop between engaged and released positions.

In another embodiment additional stops are provided on the support frame located between an upper end of the hingeing head bar and the fixed head bar to limit movement of the upper end of the hingeing head bar towards the fixed head bar. Preferably the additional stops are positioned relative to the stop on the actuating rod to retain the upper end of the hingeing head bar therebetween.

In a further embodiment the actuating rod is rotatable between three operating positions, namely a first operating position in which the cam engages the cam follower to release the latch and the stop is disengaged to allow movement of the hingeing head bar into the fully open safety position, a second operating position In which the cam is disengaged from the cam follower and the stop is disengaged allowing pivoting of the hingeing head bar about the pivot, and a third operating position in which the cam is disengaged from the cam follower and the stop is engaged with the hingeing head bar to retain the hingeing head bar in an upright position substantially parallel to the fixed head bar.

The invention will be more clearly understood by the following description of some embodiments thereof given by way of example only, with reference to the accompanying drawings in which:
Fig. 1 is an elevational view of an animal stall according to the invention;
Fig. 2 is a detail end elevational view of portion of the animal stall;
Fig. 3 is a detail end elevational view of another portion of the animal stall;
Fig. 4 is an elevational view of a movable head bar forming portion of the stall;
Fig. 5 is an end elevational view of the movable head bar shown in Fig. 4;
Fig. 6 is a perspective view of a pivot arm portion of the stall;
Fig. 7 is a detail elevational view of a receiver portion of the pivot arm shown in Fig. 6;
Fig. 8 is an exploded, partially sectioned, elevational view showing locking means for the movable head bar;
Fig. 9 is a detail sectional elevational view of portion of the locking means;
Fig. 10 is a detail plan view of the locking means portion shown in Fig. 9;
Fig. 11 is a detail sectional elevational view of an actuating rod forming portion of the locking means;
Fig. 12 is a sectional view of the actuating rod;
Fig. 13 is a plan view of the actuating rod; and
Fig. 14 is an elevational view similar to Fig. 1 showing the stall in use.
Fig. 15 is a detail view similar to Fig. 6 showing an alternative pivot arm construction.

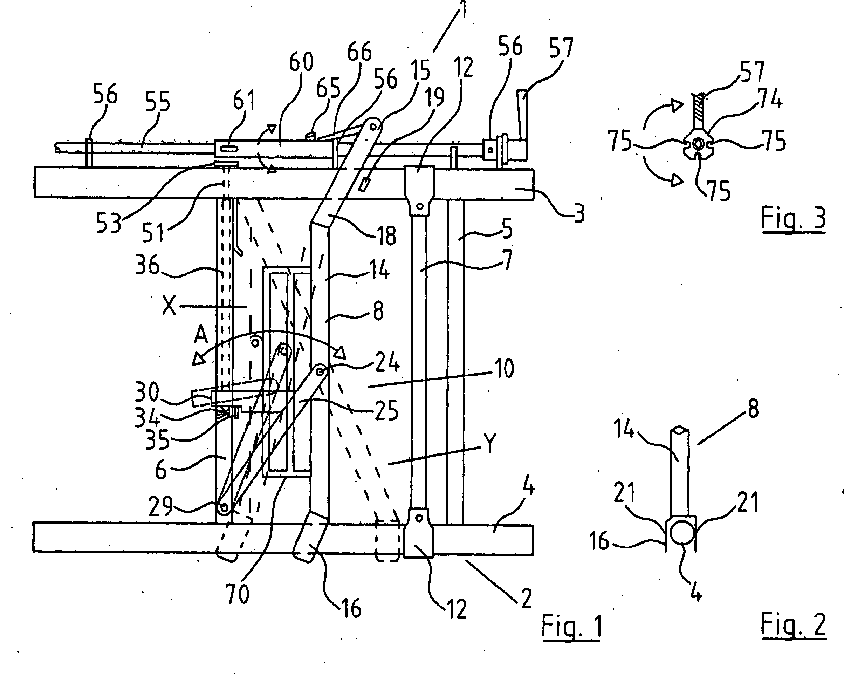

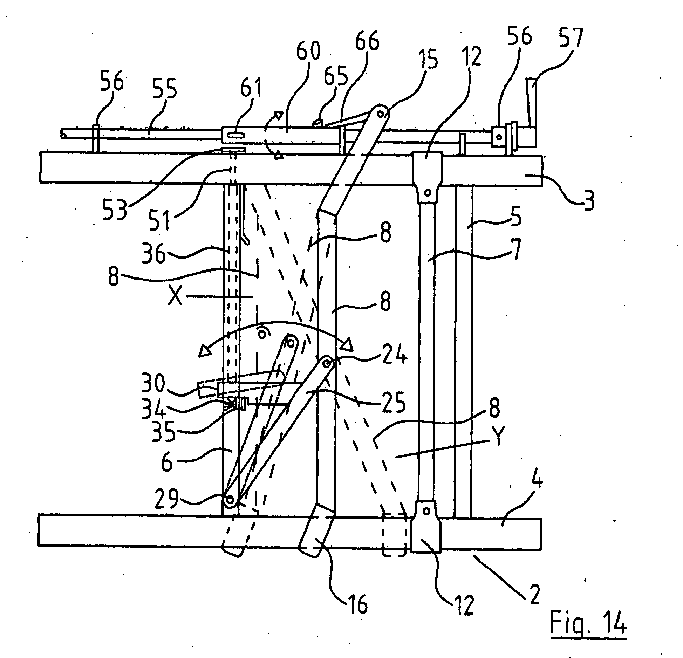

Referring to the drawings, and initially to Figs. 1 to 14 thereof, there is illustrated an animal stall according to the invention indicated generally by the reference numeral 1. The stall 1 has a support frame 2 comprising a pair of spaced-apart substantially parallel rails, namely an upper rail 3 and a lower rail 4 interconnected by spaced-apart upright stanchions 5, 6. A pair of head bars are mounted between the rails 3, 4 and comprise a fixed head bar 7 and a hingeing head bar 8. An access opening 10 is defined between the head bars 7, 8 for through passage of an animals head. The hingeing head bar 8 is movable laterally relative to the fixed head bar 7 in the plane of the stall 1 between a normal operating position as illustrated in Fig. 1 which allows restricted access of the animals head through the access opening 10 and a fully open safety position as shown in broken outline in Fig. 1 and Fig. 14 indicated at X in a collapsed upright position adjacent the stanchion 6, which greatly increases the size of the access openings and allows unrestricted movement of the animals head between the head bars 7, 8 through the access opening 10.

The fixed head bar 7 is secured by mounting brackets 12 to the rails 3, 4. These mounting brackets 12 clamp onto the rails 3, 4. During manufacture this allows sliding adjustment of the fixed head bar 7 along the rails 3, 4. When set in the desired position the mounting brackets 12 are tightened up on the rails 3, 4 to securely clamp the fixed head bar 7 in position. Thus the width of the access opening 10 in the normal operating position can be adjusted and set.

The hingeing head bar 8 has a central portion 14 which extends for most of the distance between the lower rail 4 and upper rail 3. U-shaped slide forks are provided at each end of the central portion 14, namely an upper slide fork 15 and a lower slide fork 16. The upper slide fork 15 has an inner end 17 secured on the central portion 14 with a pair of outwardly extending arms 18 which as can be seen in the drawing are angled relative to the central portion 14. Similarly, the lower slide fork 16 has an inner end 20 attached to a lower end of the central portion 14 and a pair of outwardly extending arms 21 which are angled relative to the central portion 14. It will be noted that the hingeing head bar 8 is a loose sliding fit between the rails 3, 4 for movement towards and away from the fixed head bar 7.

The arms 18 of the upper slide fork 15 are engagable against associated stops 19 on each side of the upper rail 3 to limit movement of the hingeing head bar 8 towards the fixed head bar 7.

Intermediate the ends of the central portion 14, at about half way along the central portion 14 a through hole 23 is provided. This is engaged by a pivot pin 24 which also engages and mounts the hingeing head bar 8 on a pivot arm 25. The pivot arm 25 has a pair of spaced-apart bars 26 with through holes 27 at their upper ends for engagement by the pivot pin 24 and through holes 28 at their lower ends for engagement by a pivot pin 29 to mount the pivot arm 25 at a lower end of the stanchion 6. The use of two bars 26 allows these bars 26 to pass on either side of the stanchion 6 in the folded position. A U-shaped receiver element 30 straddles the stanchion 6 having side walls 31 which extend outwardly from each of the bars 26, outer ends of the side walls 31 being interconnected by an end wall 32. A receiver step 34 is provided at an outer end of each side wall 31.

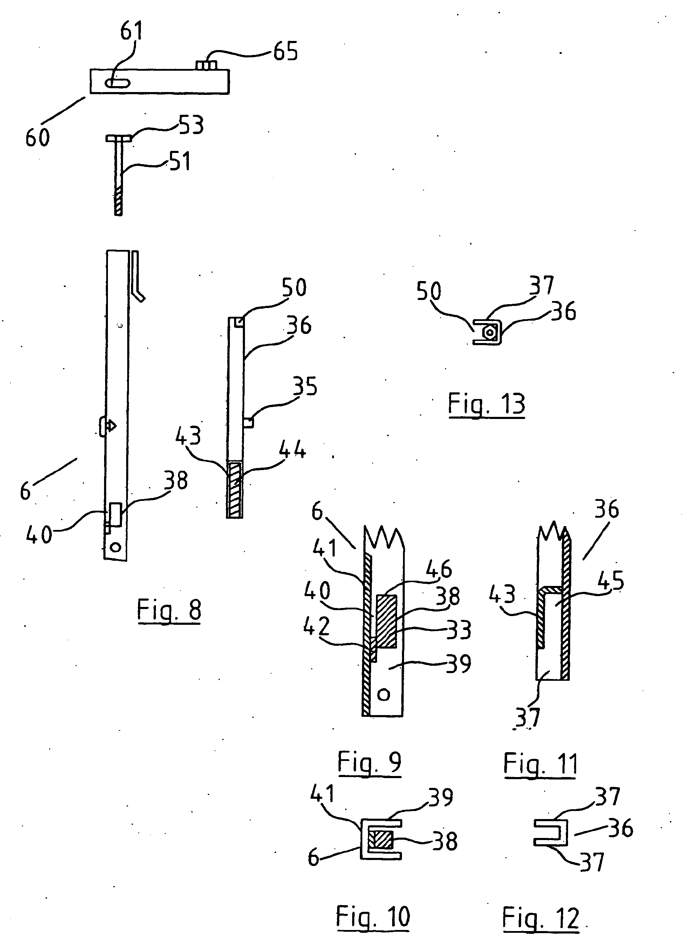

The stanchion 6 is of channel section as can be seen in Fig. 10. A latch bar 35 which is releasably engagable in the receiver slot 34 is carried on a locking bar 36 which is slidably mounted within the stanchion 6 for vertical movement within the stanchion 6. The locking bar 36 is also of channel section as can be seen in Fig. 12 having side walls 37 which slide between each side of a guide member 38 located within the stanchion 6 and side walls 39 of the stanchion 6. The guide member 38 comprises a pair of metal blocks 33, 42 welded together and to an inner wall 41 of the stanchion 6. A slot 40 is provided between a rear of an outermost portion 33 of the guide 38 and the inner wall 41 of the stanchion 6 for reception of a complementary tongue 43 on the locking bar 36. A coil spring 44 locates in a chamber 45 formed between an inner end of the tongue 43 and a top 46 of the outermost portion 33 of the guide 38 when the tongue 43 is engaged in the slot 40 to urge the locking bar 36 upwardly engaging the latch bar 35 in the receiver slot 34 of the receiver element 30.

At an upper end of the locking bar 36 a nut 50 is located within the channel of the locking bar 36. This nut 50 is engaged by a complementary bolt 51 which projects upwardly therefrom through an associated opening in the upper rail 3, a flanged head 53 of the bolt 51 projecting above the upper rail 3 as can be seen in Figs. 1 and 14.

Mounted on the upper rail 3, and extending substantially parallel thereto, is an actuating rod 55 which is rotatably supported on mounting brackets 56 and has an actuating handle 57 at one end. A sleeve 60 is fixed on the actuating rod 55. This sleeve 60 has a cam 61 projecting outwardly therefrom. Thus when the actuating rod 55 is rotated the cam 61 engages the flanged head 53 of the bolt 51 urging the locking bar 36 downwardly against spring bias to release the latch bar 35 from the receiver 34. This in turn will allow the pivot arm 25 to pivot in the direction of arrow A (Fig. 1) which allows movement of the hingeing head bar 8 away from the fixed head bar 7 into a fully open safety position adjacent the stanchion 6 as indicated in broken outline at X in Fig. 1 and Fig. 14. Effectively then the bolt 51 and locking bar 36 form a spring loaded cam follower operable for release of the latch bar 35 from the receiver element 30.

A movable stop 65 is also provided on the sleeve 60 which is releasably engagable with an associated locking arm 66 which extends outwardly from an upper end of the hingeing head bar 8. This stop 65 is engagable with the locking arm 66 to prevent movement of an upper end of the hingeing head bar 8. Rotation of the rod 55 by the handle 57 will release the stop 65 and allow free movement of an upper end of the hingeing head bar 8.

A guard 70 projects laterally outwardly of the hingeing head bar 8 to prevent access by animals between the hingeing head bar 8 and the stanchion 6.

The handle 57 has a boss 74 with three spaced-apart notches 75 which are engagable with an associated locking pin (not shown) to define three locking positions for the actuating rod 55. In a first operating position the cam 61 is engaged with the locking bar 36 releasing the locking mechanism and allowing free movement of the hingeing head bar 8 into the fully open safety position. In a second position the locking mechanism is engaged but the stop 65 is disengaged. In this position the hingeing head bar 8 is supported on the pivot arm 25 in the normal position of use in which the hingeing head bar 8 is free to pivot about the pivot pin 24 as indicated at Y in broken outline in Fig. 1 and Fig. 14 for example allowing animals to move in and out of the stall freely themselves. In the third position the stop 65 is engaged locking the hingeing head bar 8 in the upright position shown in Fig. 1 substantially parallel to the fixed head bar 7 and in this position access is denied to the animal through the access opening 10 or if the animal already has its head through the access opening 10 then the head of the animal is caught in the access opening 10.

It will be appreciated that the invention provides an animal stall which allows the quick release of animals from the stall if required. A safety breakaway is provided for rapidly releasing the hingeing head bar 8 for movement into the fully open safety position. The hingeing head bar 8 can be moved to one side in an upright position to enlarge the access opening 10. It will be noted that only one stall has been described herein, however in practice normally a number of these stalls 1 will be arranged side by side in a line with common rails 3, 4 and actuating rod 55.

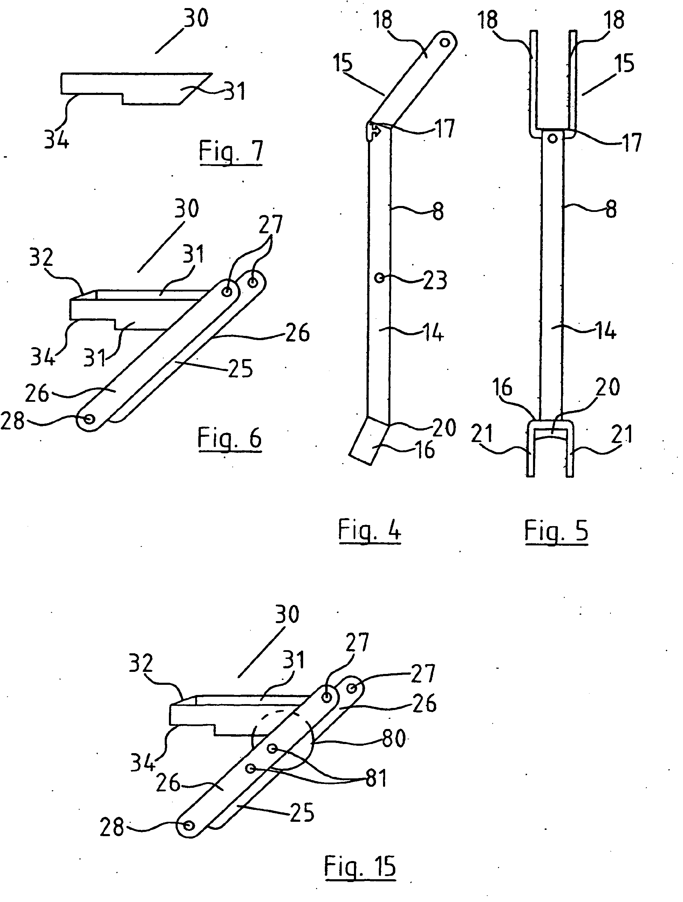

Referring now to Fig. 15 there is shown an alternative construction of pivot arm 25. Parts similar to those described previously are assigned the same reference numerals. In this case a rubber bumper 80 is mounted between the bars 26 to engage with the central portion 14 of the hingeing head bar 8 when the hingeing head bar 8 is moved to the fully collapsed position alongside the stanchion 6. The rubber bumper 80 can be mounted by a bolt for example in one of two spaced-apart pairs of adjustment holes 81 on the bars 26.

It will also be noted that the lower slide fork 16 on the hingeing head bar 8 may be omitted in an alternative embodiment.

It is envisaged that in some cases the stanchion 5 might form the fixed head bar.

The invention is not limited to the embodiments hereinbefore described which may be varied in both construction and detail within the scope of the appended claims.

## Claims

1. An animal stall (1), including:
a support frame (2),
a pair of spaced-apart head bars (7,8) mounted on the support frame (2) and defining therebetween an access opening (10) for through passage of an animal's head,
said head bars (7, 8) including at least one hingeing head bar (8) pivoted intermediate its ends about a pivot point (24) on the support frame (2) for hingeing about a substantially horizontal axis between a position generally parallel with the other head bar (7) to capture an animal's head in the opening (10) and an angled position relative to the other head bar to enlarge portion of the opening (10) at one side of the pivot point (24) to allow through passage of an animal's head,
**characterised in that** means (25, 30, 35, 36) is provided for relative movement between the pivot point (24) and the other head bar (7) between a normal operating position in which the spacing between the pivot point (24) and the other head bar (7) Is sufficient to allow through passage of the animal's neck but not it's head and a safety position of increased spacing between the pivot point (24) and the other head bar (7) which allows free passage of the animal's head through the access opening (10).

2. An animal stall (1) as claimed in claim 1 wherein the head bars (7, 8) are movable laterally relative to each other on the support frame (2) between the normal operating position and the fully open safety position.

3. An animal stall (1) as claimed in claim 1 or claim 2 wherein the head bars (7, 8) are substantially parallel in the fully open safety position.

4. An animal stall (1) as claimed in any preceding claim wherein the head bars (7, 8) are movable relative to each other in a substantially upright position.

5. An animal stall (1) as claimed in any preceding claim wherein locking means (30, 35) is provided for releasably securing the head bars (7, 8) In the normal operating position with associated actuating means (60, 61, 36) operable to open the locking means (30, 35) to allow relative movement of the head bars (7, 8) to the fully open safety position.

6. An animal stall (1) as claimed in claim 5 wherein the locking means is a movable latch (35) mounted on the support frame (2) which is releasably engagabie with a complementary receiver (30) on one of said head bars (8) which is movably mounted on the support frame (2).

7. An animal stall (1) as claimed in claim 6 wherein the latch (35) is biased towards a receiver (30) engaging position and a cam (61) release means is provided which is operable to move the latch (35) against said bias to a released position.

8. An animal stall (1) as claimed in any preceding claim wherein the hingeing head bar (8) is movably mounted on the support frame (2) and the other head -bar (7) is fixed on the support frame (2).

9. An animal stall (1) as claimed in claim 8 wherein the hingeing head bar (8) is slidably mounted on the support frame (2).

10. An animal stall (1) as claimed in claim 8 or 9 wherein the hingeing head bar (8) is pivotally mounted on the support frame (2).

11. An animal stall (1) as claimed in any preceding claim wherein the pivot point (24) for the hingeing head bar (8) comprises a pivot pin (24) which engages between the hingeing head bar (8) and a pivot arm (25) which is pivotally mounted on the support frame (2), for pivoting about a substantially horizontal axis.

12. An animal stall (1) as claimed in claim 11 wherein the receiver (30) of the locking means is provided on the pivot arm (25).

13. An animal stall (1) as claimed in any preceding claim wherein an actuating rod (55) is rotatably mounted on the support frame, the cam (61) being mounted on the actuating rod (55) and projecting outwardly therefrom for engagement with a complementary spring loaded cam follower (53, 36) on which the latch (35) is mounted, a spring (44) biasing the cam follower (53, 36) such that the latch (35) is normally engaged with the complementary receiver (30), the actuating rod (55) being rotatable to engage the cam (61) with the cam -follower (53, 36) to urge the latch (35) into a disengaged position against spring (44) bias.

14. An animal stall (1) as claimed in claim 13 wherein a stop (65) is provided on the actuating rod (55) which is engagable with a locking arm (66) at an upper end of the hingeing head bar (8) to prevent movement of the upper end of the hingeing head bar (8) away from the fixed head bar (7), the actuating rod (5) being rotatable for movement of the stop (65) between engaged and release positions.

15. An animal stall (1) as claimed in any preceding claim wherein additional stops (19) are provided on the support frame (2) located between an upper end (18) of the hingeing head bar (8) and the fixed head bar (7) to limit movement of the upper end (18) of the hingeing head bar (8) towards the fixed head bar (7).

16. An animal stall (1) as claimed in any of claims 13 to 15 wherein the actuating rod (55) is rotatable between the three operating positions, namely a first operating position in which the cam (61) engages the cam follower (53, 36) to release the latch (35) and the stop (65) is disengaged to allow movement of the hingeing head bar (8) into the fully open safety position, a second operating position in which the cam (61) is disengaged from the carn follower (53, 36) and the stomp (65) is disengaged allowing pivoting of the hingeing head bar (8) about the pivot point (24), and a third operating position in which the cam (61) is disengaged from the cam follower (53, 36) and the stop (65) is engaged with the hingeing head bar (8) to retain the hingeing head bar (8) in an upright position substantially parallel to the fixed head bar (7).

## Patentansprüche

1. Tierstallbucht (1), die Folgendes umfasst:
einen Tragrahmen (2),
ein Paar beabstandeter Kopfstangen (7, 8), die am Tragrahmen (2) angebracht sind und zwischen ihnen eine Zugangsöffnung (10) für das Durchlassen des Kopfs eines Tiers definieren,
wobei die genannten Kopfstangen (7, 8) mindestens eine klappbare Kopfstange (8) umfassen, die zwischen ihren Enden um einen Drehpunkt (24) am Tragrahmen (2) drehbar gelagert ist, um um eine im Wesentlichen horizontale Achse zwischen einer allgemein mit der anderen Kopfstange (7) parallelen Position, um den Kopf eines Tiers in der Öffnung (10) einzusperren und einer relativ zur anderen Kopfstange schrägen Position, um einen Abschnitt der Öffnung (10) auf einer Seite des Drehpunkts (24) zu vergrößern, um das Durchlassen des Kopfs eines Tiers zuzulassen, zu klappen,
**dadurch gekennzeichnet, dass** ein Mittel (25, 30, 35, 36) vorgesehen ist, für die Relativbewegung zwischen dem Drehpunkt (24) und der anderen Kopfstange (7) zwischen einer normalen Betriebsposition, in der die Beabstandung zwischen dem Drehpunkt (24) und der anderen Kopfstange (7) ausreicht, um das Durchlassen des Halses eines Tiers aber nicht seines Kopfs zuzulassen und einer Sicherheitsposition mit vergrößerter Beabstandung zwischen dem Drehpunkt (24) und der anderen Kopfstange (7), die das freie Durchlassen des Kopfs des Tiers durch die Zugangsöffnung (10) zulässt.

2. Tierstallbucht (1) nach Anspruch 1, wobei die Kopfstangen (7, 8) relativ zueinander an dem Tragrahmen (2) zwischen der normalen Betriebsposition und der ganz offenen Sicherheitsposition seitlich beweglich sind.

3. Tierstallbucht (1) nach Anspruch 1 oder Anspruch 2, wobei die Kopfstangen (7, 8) in der ganz offenen Sicherheitsposition im Wesentlichen parallel sind.

4. Tierstallbucht (1) nach einem der vorangehenden Ansprüche, wobei die Kopfstangen (7, 8) in einer im Wesentlichen aufrechten Position relativ zueinander beweglich sind.

5. Tierstallbucht (1) nach einem der vorangehenden Ansprüche, wobei ein Verriegelungsmittel (30, 35) vorgesehen ist, um die Kopfstangen (7, 8) lösbar in der normalen Betriebsposition zu befestigen, mit einem zugehörigen Betätigungsmittel (60, 61, 36), das wirksam ist, um das Verriegelungsmittel (30, 35) zu öffnen, um die Relativbewegung der Kopfstangen (7, 8) zur ganz offenen Sicherheitsposition zuzulassen.

6. Tierstallbucht (1) nach Anspruch 5, wobei es sich bei dem Verriegelungsmittel um einen am Tragrahmen (2) angebrachten beweglichen Riegel (35) handelt, der lösbar mit einer komplementären Aufnahme (30) an einer der genannten Kopfstangen (8) zum Eingriff gebracht werden kann, die beweglich am Tragrahmen (2) angebracht ist.

7. Tierstallbucht (1) nach Anspruch 6, wobei der Riegel (35) zu einer mit der Aufnahme (30) in Eingriff befindlichen Position hin vorgespannt ist und ein Lösemittel (61) für einen Nocken vorgesehen ist, das wirksam ist, um den Riegel (35) gegen die genannte Vorspannung in eine gelöste Position zu bewegen.

8. Tierstallbucht (1) nach einem der vorangehenden Ansprüche, wobei die klappbare Kopfstange (8) beweglich am Tragrahmen (2) angebracht ist und die andere Kopfstange (7) am Tragrahmen (2) fixiert ist.

9. Tierstallbucht (1) nach Anspruch 8, wobei die klappbare Kopfstange (8) gleitfähig am Tragrahmen (2) angebracht ist.

10. Tierstallbucht (1) nach Anspruch 8 oder 9, wobei die klappbare Kopfstange (8) drehbar am Tragrahmen (2) angebracht ist.

11. Tierstallbucht (1) nach einem der vorangehenden Ansprüche, wobei der Drehpunkt (24) für die klappbare Kopfstange (8) einen Drehzapfen (24) umfasst, der zwischen der klappbaren Kopfstange (8) und einem, zum Drehen um eine im Wesentlichen horizontale Achse, drehbar am Tragrahmen (2) angebrachten Dreharm (25) eingreift.

12. Tierstallbucht (1) nach Anspruch 11, wobei die Aufnahme (30) des Verriegelungsmittels am Dreharm (25) vorgesehen ist.

13. Tierstallbucht (1) nach einem der vorangehenden Ansprüche, wobei eine Betätigungsstange (55) drehbar am Tragrahmen angebracht ist, wobei der Nocken (61) an der Betätigungsstange (55) angebracht ist und von ihr nach außen ragt, zum Eingreifen mit einem komplementären, federgespannten Schlepphebel (53, 36), an dem der Riegel (35) angebracht ist, wobei eine Feder (44) den Schlepphebel (53, 36) vorspannt, so dass sich der Riegel (35) normalerweise mit der komplementären Aufnahme (30) in Eingriff befindet, wobei die Betätigungsstange (55) drehbar ist, um den Nocken (61) mit dem Schlepphebel (53, 36) in Eingriff zu bringen, um den Riegel (35) gegen die Vorspannung der Feder (44) in eine freigegebene Stellung zu bringen.

14. Tierstallbucht (1) nach Anspruch 13, wobei ein Anschlag (65) an der Betätigungsstange (55) vorgesehen ist, der mit einem Verriegelungsarm (66) an einem oberen Ende der klappbaren Kopfstange (8) in Eingriff gebracht werden kann, um die Bewegung des oberen Endes der klappbaren Kopfstange (8) von der festen Kopfstange (7) weg zu verhindern, wobei die Betätigungsstange (5) zur Bewegung des Anschlags (65) zwischen der im Eingriff befindlichen und der gelösten Position drehbar ist.

15. Tierstallbucht (1) nach einem der vorangehenden Ansprüche, wobei zusätzliche Anschläge (19) am Tragrahmen (2) vorgesehen sind, die sich zwischen einem oberen Ende (18) der klappbaren Kopfstange (8) und der festen Kopfstange (7) befinden, um die Bewegung des oberen Endes (18) der klappbaren Kopfstange (8) zur festen Kopfstange (7) hin zu begrenzen.

16. Tierstallbucht (1) nach einem der Ansprüche 13 bis 15, wobei die Betätigungsstange (55) zwischen den drei Betriebspositionen drehbar ist, und zwar einer ersten Betriebsposition, in der der Nocken (61) am Schlepphebel (53, 36) angreift, um den Riegel (35) zu lösen und der Anschlag (65) freigegeben ist, um die Bewegung der klappbaren Kopfstange (8) in die ganz offene Sicherheitsposition zuzulassen, einer zweiten Betriebsposition, in der der Nocken (61) vom Schlepphebel (53, 36) freigegeben ist und der Anschlag (65) freigegeben ist, so dass das Drehen der klappbaren Kopfstange (8) um den Drehpunkt (24) zugelassen wird und einer dritten Betriebsposition, in der der Nocken (61) vom Schlepphebel (53, 36) freigegeben ist und sich der Anschlag (65) mit der klappbaren Kopfstange (8) in Eingriff befindet, um die klappbare Kopfstange (8) in einer aufrechten Position im Wesentlichen parallel zur festen Kopfstange (7) zu halten.

## Revendications

1. Stalle pour animal (1), comprenant :
un cadre de support (2),
une paire de barres de tête espacées (7, 8) montées sur le cadre de support (2) et définissant entre elles une ouverture d'accès (10) pour le passage traversant de la tête d'un animal,
lesdites barres de tête (7, 8) comprenant au moins une barre de tête à articulation (8) pivotée entre ses extrémités au niveau d'un point de pivotement (24) sur le cadre de support (2) à des fins d'articulation au niveau d'un axe dans une large mesure horizontal entre une position généralement parallèle à l'autre barre de tête (7) pour capturer la tête d'un animal dans l'ouverture (10) et une position oblique par rapport à l'autre barre de tête pour agrandir la partie de l'ouverture (10) d'un côté du point de pivotement (24) pour permettre le passage traversant de la tête d'un animal,
**caractérisée en ce qu'**un moyen (25, 30, 35, 36) est mis en oeuvre à des fins de mouvement relatif entre le point de pivotement (24) et l'autre barre de tête (7) entre une position normale d'utilisation dans laquelle l'écart entre le point de pivotement (24) et l'autre barre de tête (7) est suffisant pour permettre le passage traversant du cou de l'animal mais pas de sa tête et une position de sécurité à écart supérieur entre le point de pivotement (24) et l'autre barre de tête (7) qui permet le libre passage de la tête de l'animal au travers de l'ouverture d'accès (10).

2. Stalle pour animal (1) selon la revendication 1, dans laquelle les barres de tête (7, 8) sont mobiles de manière latérale l'une par rapport à l'autre sur le cadre de support (2) entre la position normale d'utilisation et la position de sécurité entièrement ouverte.

3. Stalle pour animal (1) selon la revendication 1 ou la revendication 2, dans laquelle les barres de tête (7, 8) sont dans une large mesure parallèles dans la position de sécurité entièrement ouverte.

4. Stalle pour animal (1) selon l'une quelconque des revendications précédentes, dans laquelle les barres de tête (7, 8) sont mobiles l'une par rapport à l'autre dans une position dans une large mesure verticale.

5. Stalle pour animal (1) selon l'une quelconque des revendications précédentes, dans laquelle un moyen de verrouillage (30, 35) est mis en oeuvre pour assujettir de manière libérable les barres de tête (7, 8) dans la position normale d'utilisation avec un moyen d'actionnement associé (60, 61, 36) fonctionnant pour ouvrir le moyen de verrouillage (30, 35) pour permettre un mouvement relatif des barres de tête (7, 8) jusqu'à la position de sécurité entièrement ouverte.

6. Stalle pour animal (1) selon la revendication 5, dans laquelle le moyen de verrouillage est un verrou mobile (35) monté sur le cadre de support (2) en mesure d'être accouplé de manière libérable avec un dispositif récepteur complémentaire (30) sur l'une desdites barres de tête (8) dont le montage est effectué de manière mobile sur le cadre de support (2).

7. Stalle pour animal (1) selon la revendication 6, dans laquelle le verrou (35) est sollicité vers une position d'accouplement avec le dispositif récepteur (30) et un moyen de libération à came (61) est mis en oeuvre à des fins d'utilisation pour permettre le déplacement du verrou (35) contre ladite sollicitation jusqu'à une position libérée.

8. Stalle pour animal (1) selon l'une quelconque des revendications précédentes, dans laquelle la barre de tête à articulation (8) est montée de manière mobile sur le cadre de support (2) et l'autre barre de tête (7) est fixe sur le cadre de support (2).

9. Stalle pour animal (1) selon la revendication 8, dans laquelle la barre de tête à articulation (8) est montée de manière coulissante sur le cadre de support (2).

10. Stalle pour animal (1) selon la revendication 8 ou la revendication 9, dans laquelle la barre de tête à articulation (8) est montée de manière pivotante sur le cadre de support (2).

11. Stalle pour animal (1) selon l'une quelconque des revendications précédentes, dans laquelle le point de pivotement (24) pour la barre de tête à articulation (8) comporte une broche de pivotement (24) qui s'accouple entre la barre de tête à articulation (8) et un bras de pivotement (25) qui est monté de manière pivotante sur le cadre de support (2), à des fins de pivotement autour d'un axe dans une large mesure horizontal.

12. Stalle pour animal (1) selon la revendication 11, dans laquelle le dispositif récepteur (30) du moyen de verrouillage est mis en oeuvre sur le bras de pivotement (25).

13. Stalle pour animal (1) selon l'une quelconque des revendications précédentes, dans laquelle une bielle d'actionnement (55) est montée de manière rotative sur le cadre de support, la came (61) étant montée sur la bielle d'actionnement (55) et se projetant vers l'extérieur en provenance de celle-ci à des fins d'accouplement avec un élément rapporté de came à ressort complémentaire (53, 36) sur lequel le verrou (35) est monté, un ressort (44) sollicitant l'élément rapporté de came (53, 36) de telle manière que le verrou (35) est normalement accouplé au dispositif récepteur complémentaire (30), la bielle d'actionnement (55) étant rotative à des fins d'accouplement de la came (61) avec l'élément rapporté de came (53, 36) pour solliciter le verrou (35) en une position désaccouplée contre la sollicitation du ressort (44).

14. Stalle pour animal (1) selon la revendication 13, dans laquelle une butée (65) est mise en oeuvre sur la bielle d'actionnement (55) qui est en mesure d'être accouplée avec un bras de verrouillage (66) au niveau d'une extrémité supérieure de la barre de tête à articulation (8) pour empêcher tout mouvement de l'extrémité supérieure de la barre de tête à articulation (8) à distance de la barre de tête fixe (7), la bielle d'actionnement (5) étant rotative à des fins de mouvement de la butée (65) entre la position accouplée et la position libérée.

15. Stalle pour animal (1) selon l'une quelconque des revendications précédentes, dans laquelle des butées supplémentaires (19) sont mises en oeuvre sur le cadre de support (2) se trouvant entre une extrémité supérieure (18) de la barre de tête à articulation (8) et la barre de tête fixe (7) pour limiter le mouvement de l'extrémité supérieure (18) de la barre de tête à articulation (8) vers la barre de tête fixe (7).

16. Stalle pour animal (1) selon l'une quelconque des revendications 13 à 15, dans laquelle la bielle d'actionnement (55) est rotative entre les trois positions d'utilisation, à savoir une première position d'utilisation dans laquelle la came (61) s'accouple avec l'élément rapporté de came (53, 36) pour libérer le verrou (35) et la butée (65) est désaccouplée pour permettre le mouvement de la barre de tête à articulation (8) jusqu'à la position de sécurité entièrement ouverte, une deuxième position d'utilisation dans laquelle la came (61) est désaccouplée de l'élément rapporté de came (53, 36) et la butée (65) est désaccouplée pour permettre le pivotement de la barre de tête à articulation (8) autour du point de pivotement (24), et une troisième position d'utilisation dans laquelle la came (61) est désaccouplée de l'élément rapporté de came (53, 36) et la butée (65) est accouplée avec la barre de tête à articulation (8) pour retenir la barre de tête à articulation (8) en position verticale dans une large mesure parallèle à la barre de tête fixe (7).
